# EUROPÄISCHE PATENTANMELDUNG

(11) **EP 2 053 321 A1**
(43) Veröffentlichungstag der Anmeldung: **29.04.2009**
(21) Anmeldenummer: 07020628.9
(22) Anmeldetag: 22.10.2007
(51) Int. Cl.: F24J 2/14

(54) **Kollektoranordnung**

(71) Anmelder: Wohllaib, Karl, 88453 Erolzheim (DE)
(72) Erfinder: Wohllaib, Karl, 88453 Erolzheim (DE)
(74) Vertreter: Meyer, Thorsten

(57) **Zusammenfassung**

Die Erfindung betrifft eine Kollektoranordnung (1) mit einem Sammelspiegel (2) für Wärme- und Licht-Strahlung (3) und einen im wesentlichen im Brennpunkt (21) des Sammelspiegels angeordneten Absorber (4), wobei der Sammelspiegel (2) wenigstens teilweise als Rinnenkollektor-Spiegel (22) ausgebildet ist und den Strahlungseinfall auf einen diesem zugeordneten Absorber (4) bündelt, wobei der Rinnenkollektor-Spiegel (22) wenigstens teilweise parabel-förmig ausgebildet ist, wobei der Absorber (4) aus einer Vielzahl von einem mit die Wärme aufnehmendem Medium gefüllten Röhren (41) ausgebildet ist, die parallel zueinander angeordnet sind und zum Grund (23) des im Querschnitt im wesentlichen parabel-förmig ausgebildeten Rinnenkollektor-Spiegels (22) hin im Querschnitt T-förmig angeordnet sind.

## Beschreibung

Die Erfindung betrifft eine Kollektoranordnung mit einem Sammelspiegel für Wärme- und Licht-Strahlung und einer im wesentlichen im Brennpunkt des Sammelspiegels angeordneten Absorber.

Beim Stand der Technik sind rinnenförmige Kollektoren bekannt, bei denen in deren Brennpunkt ein Wasser führendes Rohr abgeordnet ist, um die Wärme aufzunehmen.

Nachteilig ist bei den bekannten Anordnungen dabei, dass bei nicht optimal für die Brennpunktsausleuchtung einfallender Sonnenstrahlung die Erwärmung des Wasser führenden Rohres nicht optimal ist.

Die Kollektoren des Stands der Technik sind dabei daher zuweist für eine Nachführung nach dem jeweiligen Sonnenstand ausgelegt.

Aufgabe der Erfindung ist es eine verbesserte Kollektoranordnung insbesondere für den stationären und nicht dem Sonnenstand nachgeführte Solarkollektoren zur Verfügung zu stellen, die eine verbesserte Ausbeute an solarer Strahlungsenergie ermöglicht.

Diese Aufgabe wird durch eine Kollektoranordnung nach den Merkmalen des Anspruchs 1 gelöst.

Erfindungsgemäß ist eine Kollektoranordnung mit einem Sammelspiegel für Wärme- und Licht-Strahlung und einer im wesentlichen im Brennpunkt des Sammelspiegels angeordneten Absorber, vorgeschlagen, die sich dadurch auszeichnet, dass der Sammelspiegel wenigstens teilweise als Rinnenkollektor-Spiegel ausgebildet ist und den Strahlungseinfall auf einen diesem zugeordneten Absorber bündelt, wobei der Rinnenkollektor-Spiegel wenigstens teilweise parabel-förmig ausgebildet ist, wobei der Absorber aus einer Vielzahl von einem mit die Wärme aufnehmendem Medium gefüllten Röhren ausgebildet ist, die parallel zueinander angeordnet sind und zum Grund des im Querschnitt im wesentlichen parabel-förmig ausgebildeten Rinnenkollektor-Spiegels hin im Querschnitt T-förmig angeordnet sind. Hierdurch ist auf besonders effektive Aufnahme der Stahlungs- und Wärmeenergie ermöglicht.

Bevorzugterweise ist im Brennpunkt der im wesentlichen parabel-förmigen Anordnung des Rinnenkollektor-Spiegels die zum Grund des Rinnenkollektor-Spiegels hin im Querschnitt T-förmig abgewandteste Röhre angeordnet.

Eine Variante der Erfindung sieht vor, dass der Sammelspiegel an seinen Rändern wenigstens einen weiteren zur abgewandtesten Röhre des T-förmigen Kollektors hin Strahlung sammelnden Zusatzspiegel aufweist.

Von Vorteil sind die Röhren aus Metall gefertigt, dabei ist Stahl wegen seiner günstigen Verfügbarkeit sehr gut geeignet. Kupfer beispielsweise ist von der Wärmeausbeute noch besser geeignet, aber etwas teurer.

Eine ebenso bevorzugte Weiterbildung der Erfindung sieht vor, dass die Röhren außen mit einem Licht- und Wärme-Strahlungs-absorbierenden Überzug versehen sind, der insbesondere schwarz ist. Hierdurch wird die Wärmeaufnahme verbessert.

Eine ebenso vorteilhafte Variante der Erfindung sieht vor, dass mehrere Rinnenkollektor-Spiegel mit T-förmigen Absorber-Anordnungen parallel nebeneinander angeordnet sind.

Die Röhren des/der Absorber sind nach einer vorteilhaften Weiterbildung der Erfindungmiteinander dergestalt verbunden, dass das Medium zunächst die dem/den Brennpunkten abgewandteren Röhren durchläuft und die letzte oder annähernd zuletzt durchlaufene Röhre die im Brennpunkt liegende Röhre ist.

Nach einer besonders bevorzugten Weiterbildung der Erfindung ist vorgesehen, dass die Röhren des/der Absorber aus einer zusammenhängenden gebogenen Rohrleitung bestehen.

Eine vorteilhafte Variante sieht vor, dass wenigstens eine die Strahlung bündelnde Linse vorgesehen ist, die Strahlung auf die letzte oder annähernd zuletzt durchlaufene Röhre bündelt.

Dem folgend ist vorgesehen, dass die Linsen im wesentlichen symmetrisch gegenüberliegend zum Absorber ausgebildet sind.

Vorteilhafterweise weisen die Linsen eine Nachführung auf, die je nach Einfallsrichtung und/oder Intensität der einfallenden Strahlung die Ausrichtung der Linsen auf eine optimale Ausleuchtung der letzten oder annähernd zuletzt durchlaufenen Röhre ausrichten.

Die Nachführung ist bevorzugterweise aus einer die einseitig beweglich angelenkten Linsen verschwenkenden auf die Strahlungs- und Umgebungswärme reagierenden Memory-Metall-Anordnung ausgebildet.

Bevorzugterweise ist die Kollektoranordnung zur Festmontage vorgesehen, und der Sammelspiegel auf eine annährend maximal auftretende natürlich vorkommende Strahlungsleistung der Sonne ausgerichtet ist.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Kollektoranordnung,
- Fig. 2: eine weitere schematische Darstellung der Kollektoranordnung,
- Fig. 3: eine schematische Darstellung einer Kollektoranordnung mit mehreren Rinnenkollektor-Spiegeln,
- Fig. 4: eine schematische Darstellung der geschlossenen Rohrleitung, die die Absorber-Röhren bilden,
- Fig. 5: eine schematische Darstellung einer erfindungsgemäßen Kollektoranordnung mit einer die einfallende Strahlung bündelnden Linse, und
- Fig. 6: die Kollektoranordnung aus Fig. 5 mit verschwenkter Linse.

Die in den Figuren gleichen Bezugsziffern bezeichnen gleiche oder gleich wirkende Elemente.

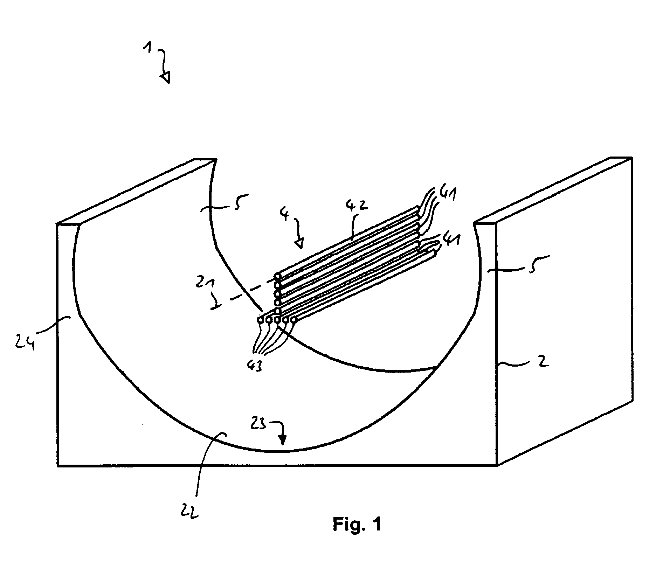

Fig. 1 zeigt die erfindungsgemäße Kollektoranordnung 1 zur Festmontage und Ausrichtung auf eine annährend maximal auftretende natürlich vorkommende Strahlungsleistung der Sonne, mit einem Sammelspiegel 2 für Wärme- und Licht-Strahlung und einen im wesentlichen im Brennpunkt 21 des Sammelspiegels angeordneten Absorber 4, wobei der Sammelspiegel 2 teilweise als Rinnenkollektor-Spiegel 22 ausgebildet ist und den Strahlungseinfall auf den Absorber 4 bündelt, der aus einer Vielzahl von einem mit die Wärme aufnehmendem Medium gefüllten Röhren 41 ausgebildet ist, die parallel zueinander angeordnet sind.

Der Absorber 4 ist dabei zum Grund 23 des im Querschnitt im wesentlichen parabel-förmig ausgebildeten Rinnenkollektor-Spiegels 22 hin im Querschnitt T-förmig angeordnet, wobei im Brennpunkt 21 des im wesentlichen parabel-förmigen Rinnenkollektor-Spiegels 22 die zum Grund des Rinnenkollektor-Spiegels hin im Querschnitt T-förmig abgewandteste Röhre 42 angeordnet ist.

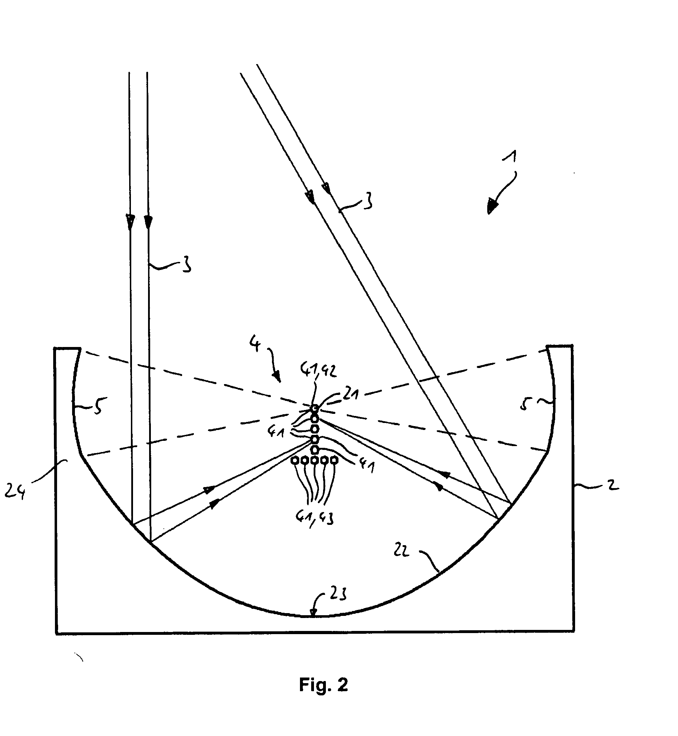

Der Rinnenkollektor-Spiegel ist 22 teilweise parabel-förmig ausgebildet und weist an seinen Rändern 24 jeweils einen weiteren zur abgewandtesten Röhre 42 des T-förmigen Absorbers 4 hin Strahlung sammelnden Zusatzspiegel 5 auf. Siehe hierzu auch Fig. 2, in der beispielhaft einfallende und dann auf den Absorber konzentrierte Wärme- und Licht-Strahlung 3 eingezeichnet ist.

Die Röhren 41 sind dabei aus Metall gefertigt und sind außen mit einem Licht- und Wärme-Strahlungs-absorbierenden schwarzen Überzug versehen.

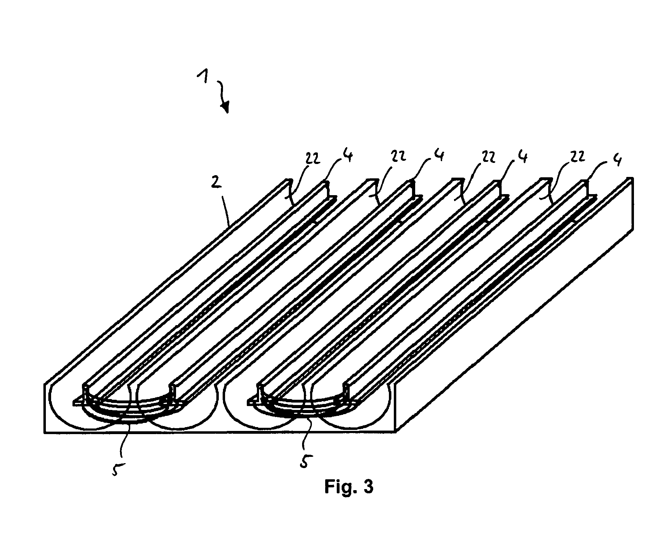

In Fig. 3 ist eine Variante der Kollektoranordnung 1 angegeben, bei der mehrere Rinnenkollektor-Spiegel 22 mit jeweils T-förmigen Absorbern 4 parallel nebeneinander angeordnet sind.

Die Röhren 41 der Absorber 4 sind miteinander dergestalt verbunden, dass das Medium zunächst die den Brennpunkten abgewandteren dem Grund 23 zugewandten Röhren 43 durchläuft und die letzte oder annähernd zuletzt durchlaufene Röhre die im Brennpunkt 21 liegende Röhre 42 ist (siehe hierzu auch Fig. 1 und Fig. 2).

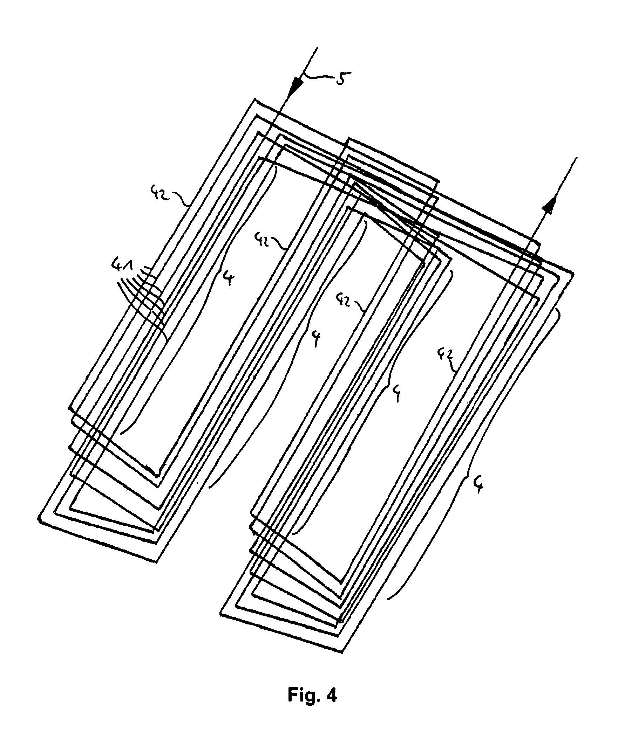

Alle Röhren 41, 42, 43 der Absorber bestehen aus einer zusammenhängenden gebogenen Rohrleitung 5, wie in Fig. 4 nochmals erklärend dargestellt.

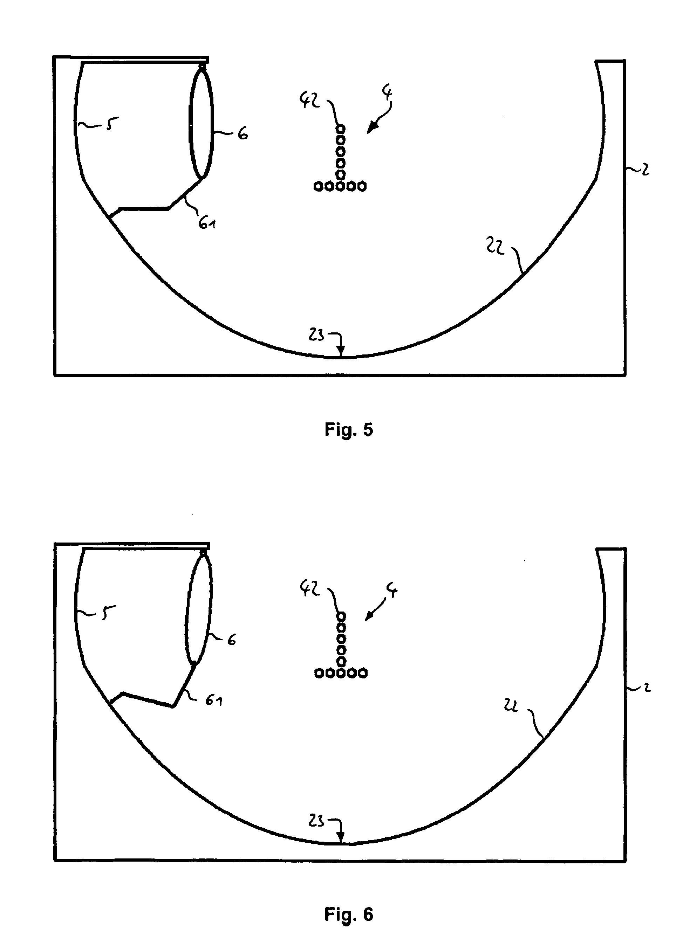

In Fig. 5 und 6 ist eine Weiterbildung der Erfindung gezeigt, bei der eine die einfallende Strahlung bündelnde Linse 6 vorgesehen ist, die Strahlung auf die letzte 42 oder annähernd zuletzt durchlaufene Röhre bündelt.

Die Linsen 6 weisen eine Nachführung 61 aus einer Memory-Metall-Anordnung auf, die je nach Einfallsrichtung und/oder Intensität der einfallenden Strahlung die Ausrichtung der Linsen 6 auf eine optimale Ausleuchtung der letzten 42 oder annähernd zuletzt durchlaufenen Röhre ausrichten. In Fig. 6 ist eine Auslenkung der Nachführung exemplarisch gezeigt.

### Bezugszeichenliste

- 1: Kollektoranordnung
- 2: Sammelspiegel
- 21: Brennpunkt
- 22: Rinnenkollektor-Spiegel
- 23: Grund des Rinnenkollektor-Spiegels
- 24: Rand des Sammelspiegels
- 3: Wärme- und Licht-Strahlung
- 4: Absorber
- 41: Röhren
- 42: dem Grund abgewandteste Röhre
- 43: dem Grund zugewandte Röhre
- 5: Rohrleitung
- 6: Linse
- 61: Nachführung

## Patentansprüche

1. Kollektoranordnung (1) mit einem Sammelspiegel (2) für Wärme- und Licht-Strahlung (3) und einen im wesentlichen im Brennpunkt (21) des Sammelspiegels angeordneten Absorber (4),
**dadurch gekennzeichnet,**
**dass** der Sammelspiegel (2) wenigstens teilweise als Rinnenkollektor-Spiegel (22) ausgebildet ist und den Strahlungseinfall auf den diesem zugeordneten Absorber (4) bündelt, wobei der Rinnenkollektor-Spiegel (22) wenigstens teilweise parabel-förmig ausgebildet ist,
wobei der Absorber (4) aus einer Vielzahl von einem mit die Wärme aufnehmendem Medium gefüllten Röhren (41) ausgebildet ist, die parallel zueinander angeordnet sind und zum Grund (23) des im Querschnitt im wesentlichen parabel-förmig ausgebildeten Rinnenkollektor-Spiegels (22) hin im Querschnitt T-förmig angeordnet sind.

2. Kollektoranordnung nach Anspruch 1,
**dadurch gekennzeichnet,**
**dass** im Brennpunkt (21) des im wesentlichen parabel-förmigen Rinnenkollektor-Spiegels (22) die zum Grund des Rinnenkollektor-Spiegels hin im Querschnitt T-förmig abgewandteste Röhre (42) angeordnet ist.

3. Kollektoranordnung nach Anspruch 1 oder 2,
**dadurch gekennzeichnet,**
**dass** der Sammelspiegel (2) an seinen Rändern (24) wenigstens einen weiteren zur abgewandtesten Röhre (42) des T-förmigen Absorbers (4) hin Strahlung sammelnden Zusatzspiegel (5) aufweist.

4. Kollektoranordnung nach einem der Ansprüche 1 bis 3,
**dadurch gekennzeichnet,**
**dass** die Röhren (41) aus Metall gefertigt sind.

5. Kollektoranordnung nach einem der Ansprüche 1 bis 4,
**dadurch gekennzeichnet,**
**dass** die Röhren (41) außen mit einem Licht- und Wärme-Strahlungs-absorbierenden Überzug versehen sind, der insbesondere schwarz ist.

6. Kollektoranordnung nach einem der Ansprüche 1 bis 5,
**dadurch gekennzeichnet,**
**dass** mehrere Rinnenkollektor-Spiegel (22) mit T-förmigen Absorbern (4) parallel nebeneinander angeordnet sind.

7. Kollektoranordnung nach einem der Ansprüche 1 bis 6,
**dadurch gekennzeichnet,**
**dass** die Röhren (41) des/der Absorber (4) miteinander dergestalt verbunden sind, dass das Medium zunächst die dem/den Brennpunkten abgewandteren dem Grund (23) zugewandten Röhren (43) durchläuft und die letzte oder annähernd zuletzt durchlaufene Röhre die im Brennpunkt (21) liegende Röhre (42) ist.

8. Kollektoranordnung nach einem der Ansprüche 1 bis 7,
**dadurch gekennzeichnet,**
**dass** die Röhren (41, 42, 43) des/der Absorber aus einer zusammenhängenden gebogenen Rohrleitung (5) bestehen.

9. Kollektoranordnung nach einem der Ansprüche 1 bis 8,
**dadurch gekennzeichnet,**
**dass** wenigstens eine die einfallende Strahlung bündelnde Linse (6) vorgesehen ist, die Strahlung auf die letzte (42) oder annähernd zuletzt durchlaufene Röhre bündelt.

10. Kollektoranordnung nach Anspruch 9,
**dadurch gekennzeichnet,**
**dass** die Linsen (6) im wesentlichen symmetrisch gegenüberliegend zum Absorber (4) ausgebildet sind.

11. Kollektoranordnung nach Anspruch 9 oder 10,
**dadurch gekennzeichnet,**
**dass** die Linsen (6) eine Nachführung (61) aufweisen, die je nach Einfallsrichtung und/oder Intensität der einfallenden Strahlung die Ausrichtung der Linsen (6) auf eine optimale Ausleuchtung der letzten (42) oder annähernd zuletzt durchlaufenen Röhre ausrichten.

12. Kollektoranordnung nach Anspruch 11,
**dadurch gekennzeichnet,**
**dass** die Nachführung (61) aus einer die einseitig beweglich angelenkten Linsen (6) verschwenkenden auf die Strahlungs- und Umgebungswärme reagierenden Memory-Metall-Anordnung ausgebildet ist.

13. Kollektoranordnung nach einem der Ansprüche 1 bis 12,
**dadurch gekennzeichnet,**
**dass** die Kollektoranordnung (1) zur Festmontage vorgesehen ist, und der Sammelspiegel (2) auf eine annährend maximal auftretende natürlich vorkommende Strahlungsleistung der Sonne ausgerichtet ist.
